Europäisches Patentamt

European Patent Office

Office européen des brevets

(19)

(11) Veröffentlichungsnummer: **0 154 017**
**A2**

(12) # EUROPÄISCHE PATENTANMELDUNG

(21) Anmeldenummer: 84115500.5

(22) Anmeldetag: 15.12.84

(51) Int. Cl.⁴: **C 05 B 5/00**
**C 05 G 3/00**

(30) Priorität: 07.03.84 DE 3408212

(43) Veröffentlichungstag der Anmeldung:
11.09.85 Patentblatt 85/37

(84) Benannte Vertragsstaaten:
BE DE FR LU

(71) Anmelder: **FELS-WERKE Peine-Salzgitter GmbH**
**Geheimrat-Ebert-Strasse 12**
**D-3380 Goslar 1(DE)**

(72) Erfinder: **Knöppel, Ingo Dr.rer.nat. Dipl.-Chem**
**Hochgericht 32**
**D-3380 Goslar 1(DE)**

(72) Erfinder: **Heer, Volker Dr.rer.nat. Dipl.-Chem.**
**Parkstrasse 17**
**D-3305 Dettum(DE)**

(74) Vertreter: **Röse, Horst, Dipl.-Ing. et al,**
**Patentanwälte Dipl.-Inge. Röse, Kosel & Sobisch**
**Odastrasse 4a Postfach 129**
**D-3353 Bad Gandersheim 1(DE)**

(54) Verfahren zur Herstellung eines Mehrnährstoffdüngers.

(57) Bei einem Verfahren zur Herstellung eines Mehrnährstoffdüngers aus Schlacken und/oder natürlichen Mineralstoffen und chemisch aufgeschlossenen Phosphaten oder Phosphorsäure als Phosphatträgern werden die Phosphatträger zunächst mit wenigstens einem reaktionsfähigen feingemahlenen basischen Zusatzmittel vermischt, mit Wasser angeteigt und anschließend feucht oder getrocknet entweder mit Schlacke und/oder den natürlichen Mineralstoffen vermischt und gemeinsam mit diesen zu einem mehlförmigen Düngemittel vermahlen oder zuerst gemahlen und anschließend mit gemahlener Schlacke und/oder gemahlenen natürlichen Mineralstoffen zu einem mehlförmigen Düngemittel vermischt.

EP 0 154 017 A2

DIPL.-ING. HORST RÖSE   DIPL.-ING. PETER KOSEL   DIPL.-ING. PETER SOBISCH
PATENTANWÄLTE
ZUGELASSEN BEIM EUROPÄISCHEN PATENTAMT – EUROPEAN PATENT ATTORNEYS

0154017

Patentanwälte Röse, Kosel & Sobisch
Postfach 129, D-3353 Bad Gandersheim 1

Odastrasse 4a
Postfach 129
D-3353 Bad Gandersheim 1

**14. Dez. 1984**

Telefon (0 53 82) 40 38
Telegramm-Adresse: Siedpatent Badgandersheim
Telex 9 57 422 **siedp d**

Ihre Akten-Nr.:
Unsere Akten-Nr.:  **2297/110 EP**

FELS-WERKE

Peine-Salzgitter  GmbH

## Verfahren zur Herstellung eines Mehrnährstoff-düngers

Die Erfindung bezieht sich auf ein Verfahren zur Herstellung eines Mehrnährstoffdüngers aus Schlacken und/ oder natürlichen Mineralstoffen und chemisch aufgeschlossenen Phosphaten oder Phosphorsäure als Phosphatträgern.

Durch weitgehende Umstellung der Stahlerzeugung auf das LD-Verfahren und den damit verbundenen Rückgang des Thomasverfahrens verringerten sich die verfügbaren Mengen an phosphathaltigen Schlacken als $P_2O_5$-Träger für die Herstellung von Thomas- und Konverterkalk.

Als Ersatzprodukt für die phosphathaltigen Schlacken sind als Phosphatträger chemisch aufgeschlossene Phosphate, wie z.B. Triplesuperphosphat (im folgenden kurz: TSP) und Dicalciumphosphat (im folgenden kurz: DCP), am

-2-

HR/J

0154017

Markt verfügbar, die z.B. mit LD-Schlacke vermischt bzw. gemeinsam vermahlen einen phosphathaltigen Dünger ergeben.

Diese Phosphatträger sind jedoch nur bedingt für den geschilderten Zweck geeignet. Es treten in der Regel Verhärtungen im Endprodukt auf, wodurch die Lagerfähigkeit nicht gegeben ist. Silierungen oder Lagerungen im Freilager sind durch die Verfestigungsneigung des auf die beschriebene Weise hergestellten Düngemittels besonders in Gegenwart von Wasser oder hoher Luftfeuchtigkeit nicht möglich. Die Mahlung z.B. von reinem TSP oder DCP ist durch die Neigung zum Zusammenbacken ebenfalls nicht möglich.

Mit dem Verfestigen gelagerten Düngematerials ist in der Regel auch eine erhebliche Löslichkeitsverminderung verbunden, die die Effektivität des Düngemittels im Boden erheblich herabsetzt.

Zur Erzeugung eines lagerfähigen Düngemittels aus mit TSP oder DCP angereicherter LD-Schlacke wird ein aufwendiges Granulierverfahren angewandt, mit dem ein gekörntes Phosphat-Düngemittel hergestellt werden kann. LD-Schlacke wird mit TSP gemeinsam in einer beheizten Mühle vermahlen, anschließend mit Wasser granuliert und dann 4 bis 5 Tage bis zur völligen Reaktion zwischen LD-Schlacke und dem TSP in einem Flachlager gelagert. Das etwas zusammengebackene Granulat wird darauf mit Ladegeräten aufgenommen, in Brechern auf Granulatgröße zerkleinert, abgesiebt und zum Versand gelagert. Ein anderes angewandtes Verfahren sieht die Zugabe von Antibackmitteln vor, die die verfestigende Wirkung der vorgenannten Phosphatträger unterbinden sollen, wobei man allerdings einen mehlförmigen Dünger erhält. Dieses Verfahren ist technisch noch nicht erprobt. Beide geschilderte Verfahren sind mit einem erheblichen Anlagenaufwand bzw. mit teuren zusätzlichen Einsatzstoffen verbunden und damit sehr kostenintensiv.

Der Erfindung liegt die Aufgabe zugrunde, ein Verfahren zur Herstellung eines phosphathaltigen Düngemittels der eingangs angegebenen Art zu schaffen, das auf kostensparende Weise ausgeführt werden kann und zu einem Düngemittel führt, bei dem die geschilderten schädlichen Neigungen zum Zusammenbacken und zum Verfestigen auf ein Minimum verringert oder ganz beseitigt werden und das eine hohe Ausnutzung der Nährstoffe infolge hoher Löslichkeit im Boden ermöglicht.

Dies wird nach der Erfindung vor allem dadurch erreicht, daß die Phosphatträger, also die chemisch aufgeschlossenen Phosphate oder die Phosphorsäure, zunächst mit wenigstens einem reaktionsfähigen feingemahlenen basischen Zusatzmittel vermischt, mit Wasser angeteigt und anschließend feucht oder getrocknet entweder mit der Schlacke und/oder den natürlichen Mineralstoffen vermischt und gemeinsam mit diesen zu einem mehlförmigen Düngemittel vermahlen oder zuerst gemahlen und anschließend mit gemahlener Schlacke und/oder gemahlenen natürlichen Mineralstoffen zu einem mehlförmigen Düngemittel vermischt werden. Es hat sich gezeigt, daß sowohl das Vorgemisch aus den Phosphatträgern und den basischen Zusatzmitteln als auch das Gesamtgemisch gut mahlbar sind und nur wenig zu Verbackungen neigen. Das erfindungsgemäß erzeugte mehlförmige Düngemittel backt überraschenderweise auch bei feuchter Lagerung nicht zusammen und besitzt eine sehr geringe Verfestigungsneigung und ist schließlich ein phosphathaltiges Düngemittel guter Qualität. Die Verluste an zitronensäure-löslichem $P_2O_5$, die bei der Anwendung des erfindungsgemäßen Verfahrens entstehen, sind unbedeutend. Das erfindungsgemäß

hergestellte Düngemittel weist wegen der geringen Neigung zum Verbacken und Verfestigen eine ausgezeichnete Lagerfähigkeit auf. Silierungen oder Lagerung im Freilager auch in Gegenwart von Wasser oder hoher Luftfeuchtigkeit sind möglich.

Die verfahrenstechnisch bedingten Kosten sind gering, da nur die Phosphatträger mit dem basischen Zusatzmittel im Verhältnis von ungefähr 1:1 angeteigt werden. Der weitaus größere Anteil der übrigen Bestandteile des Düngemittels wird erst nach der erfindungsgemäßen Behandlung des Phosphatträgers beim Vorgemisch hinzugefügt.

Das Verfahren nach der Erfindung geht von der Erkenntnis aus, daß die beim Mahlen und Lagern störenden Back- und Verfestigungsvorgänge, die chemisch aufgeschlossene Phosphate und Phosphorsäure verursachen, gezielt durch entsprechende verfahrenstechnische Schritte vorweggenommen werden müssen. Dies wird durch Anwendung des erfindungsgemäßen Verfahrens überraschenderweise erreicht.

Aufgrund der geringen Verfestigungsneigung des erfindungsgemäß hergestellten mehlförmigen Düngemittels ist es möglich, aus diesem Düngemittelmehl Pellets (Granalien) zu erzeugen. Es hat sich gezeigt, daß diese Pellets staubfrei auf den Acker aufgebracht werden können und vor allem durch die Bodenfeuchtigkeit wieder schnell zerfallen, wodurch die Nährstoffe wesentlich schneller und weitgehender genutzt werden als bei den Pellets, die nach dem eingangs geschilderten Verfahren hergestellt werden.

Als chemisch aufgeschlossene Phosphate können erfindungsgemäß Alkali-, Erdalkali- und Ammoniumphosphate einzeln oder zu mehreren verwendet werden. Zweckmäßig werden nach einer anderen Ausführungsform der Erfindung als chemisch aufgeschlossene Phosphate TSP oder DCP verwendet.

Als basische Zusatzmittel können Calciumsilikate und/oder Calciumsilikathydrate verwendet werden. Dabei haben sich als Calcium-Silikat- bzw. Calcium-Silikathydrat-Träger Zemente, Gasbeton oder Zementstein erwiesen, wobei Gasbeton oder Zementstein feingemahlen eingesetzt werden. Als basische Zusatzmittel haben sich Stahlwerksschlacken, insbesondere LD-Schlacke, Hochofenschlacke oder Flugasche als vorteilhaft erwiesen. Als basische Zusatzmittel können vorteilhaft in anderen Anwendungsfällen Branntkalk, Kalkhydrat, Kalkstein oder Dolomit eingesetzt werden.

Die chemisch aufgeschlossenen Phosphate werden zweckmäßig im Anlieferungszustand eingesetzt, z.B. in Körnungen in einer Korngröße kleiner oder gleich 4mm.

Als natürliche Mineralstoffe kommen z.B. Kalksteinmehl, Kalksteingries und/oder Dolomitsteinmehl zum Einsatz.

Im folgenden werden zwei vorteilhafte Ausführungsformen des Verfahrens nach der Erfindung beschrieben:

Beispiel 1:

Es werden 15 Gew.-% feingemahlener Gasbetonbruch mit einer Korngröße unter 0,09mm und 15 Gew.-% TSP mit ca. 48 Gew.-% zitronensäurelöslichem $P_2O_5$ vermischt und in die gleiche Menge Wasser zu einem Teig eingerührt. Anschließend wird dieses Vorgemisch bis zur Gewichts-Konstanz getrocknet und dann mit 70 Gew.-% LD-Schlacke vermischt und gemeinsam vermahlen.

Man erhält einen mehlförmigen phosphathaltigen Konverterkalk, der sich auch bei Lagerung in feuchter Luft praktisch nicht verfestigt und 7,5 Gew.-% zitronensäurelösliches $P_2O_5$ enthält.

Beispiel 2:

Es werden 15 Gew.-% feingemahlene LD-Schlacke mit einer Korngröße unter 0,09mm und 15 Gew.-% TSP mit ca. 48 Gew.-% zitronensäurelöslichem $P_2O_5$ miteinander gemischt, in die gleiche Menge Wasser zu einem Teig eingerührt und anschließend bis zur Gewichts-Konstanz getrocknet.

Dann wird das Vorgemisch mit 70 Gew.-% LD-Schlacke gemeinsam vermahlen. Der so gewonnene mehlförmige phophathaltige Konverterkalk verfestigt sich bei Lagerung in feuchter Luft nicht, enthält 8,2 Gew.-% zitronensäurelösliches $P_2O_5$ und kann zu Pellets mit hervorragenden Eigenschaften weiterverarbeitet werden.

Patentanwälte Dipl.-Inge.
Röse, Kosel & Sobisch

**IPL.-ING. HORST RÖSE   DIPL.-ING. PETER KOSEL   DIPL.-ING. PETER SOBISCH**
PATENTANWÄLTE
ZUGELASSEN BEIM EUROPÄISCHEN PATENTAMT – EUROPEAN PATENT ATTORNEYS

0154017

Patentanwälte Röse, Kosel & Sobisch
Postfach 129, D-3353 Bad Gandersheim 1

Odastrasse 4a
Postfach 129
D-3353 Bad Gandersheim 1

**14. Dez. 1984**

Telefon (0 53 82) 40 38
Telegramm-Adresse: Siedpatent Badgandersheim

Telex 9 57 422 siedp d

Ihre Akten-Nr.:
Unsere Akten-Nr.: **2297/110 EP**

FELS-WERKE

Peine-Salzgitter GmbH

01                P A T E N T A N S P R Ü C H E

1. Verfahren zur Herstellung eines Mehrnährstoffdüngers aus Schlacken und/oder natürlichen Mineralstoffen und chemisch aufgeschlossenen Phosphaten oder Phosphorsäure als Phosphatträger, dadurch gekennzeichnet, daß die Phosphatträger zunächst mit wenigstens einem reaktionsfähigen feingemahlenen basischen Zusatzmittel vermischt, danach mit Wasser angeteigt und anschließend feucht oder getrocknet entweder mit der Schlacke und/oder den natürlichen Mineralstoffen vermischt und gemeinsam mit diesen zu einem mehlförmigen Düngemittel vermahlen oder zuerst gemahlen und anschließend mit gemahlener Schlacke und/oder gemahlenen natürlichen Mineralstoffen zu einem mehlförmigen Düngemittel vermischt werden.

2. Verfahren nach Anspruch 1, dadurch gekennzeichnet, daß als chemisch aufgeschlossene Phosphate Alkali-,

-2-
HR/La

Erdalkali- und Ammoniumphosphate einzeln oder zu mehreren verwendet werden.

3. Verfahren nach Anspruch 1, dadurch gekennzeichnet, daß als chemisch aufgeschlossene Phosphate Triplesuperphosphat (TSP) oder Dicalciumphosphat (DCP) verwendet werden.

4. Verfahren nach Anspruch 1, dadurch gekennzeichnet, daß als basische Zusatzmittel Calciumsilikate und/oder Calciumsilikathydrate verwendet werden.

5. Verfahren nach den Ansprüchen 1 und 4, dadurch gekennzeichnet, daß als Calcium-Silikat- bzw. Calcium-Silikathydrat-Träger Zemente, Gasbeton oder Zementstein verwendet werden.

6. Verfahren nach Anspruch 1, dadurch gekennzeichnet, daß als basische Zusatzmittel Stahlwerksschlacken, Hochofenschlacke oder Flugasche verwendet werden.

7. Verfahren nach Anspruch 1, dadurch gekennzeichnet, daß als basische Zusatzmittel Branntkalk, Kalkhydrat, Kalkstein oder Dolomit verwendet werden.

8. Verfahren nach Anspruch 1, dadurch gekennzeichnet, daß als Schlacke LD-Schlacke verwendet wird.

9. Verfahren nach einem der Ansprüche 1 bis 8, dadurch gekennzeichnet, daß das erzeugte mehlförmige Düngemittel zu Pellets (Granalien) verarbeitet wird.

10. Verfahren nach einem der Ansprüche 1 bis 9, dadurch gekennzeichnet, daß 15 Gew.-% feingemahlener Gasbetonbruch mit einer Korngröße unter 0,09mm und 15 Gew.-% TSP mit ungefähr 48 Gew.-% zitronensäurelöslichem $P_2O_5$ vermischt und in die gleiche Menge Wasser zu einem Teig eingerührt werden, dieses Vorgemisch anschließend bis zur Gewichts-Konstanz getrocknet und danach mit 70 Gew.-% LD-Schlacke vermischt und gemeinsam vermahlen wird.

11. Verfahren nach einem der Ansprüche 1 bis 9, dadurch gekennzeichnet, daß 15 Gew.-% feingemahlene LD-Schlacke mit einer Korngröße unter 0,09mm und 15 Gew.-% TSP mit ungefähr 48 Gew.-% zitronensäurelöslichem $P_2O_5$ miteinander vermischt, in die gleiche Menge Wasser zu einem Teig eingerührt und anschließend bis zur Gewichts-Konstanz getrocknet werden und danach dieses Vorgemisch mit 70 Gew.-% LD-Schlacke gemeinsam vermahlen wird.

Patentanwälte Dipl.-Inge.
Röse, Kosel & Sobisch